# EUROPÄISCHE PATENTANMELDUNG

(11) **EP 1 925 977 A2**
(43) Veröffentlichungstag der Anmeldung: **28.05.2008**
(21) Anmeldenummer: 07022714.5
(22) Anmeldetag: 23.11.2007
(51) Int. Cl.: G03B 15/00, H04N 1/00

(54) **Postkartenerstellungssystem**

(30) Priorität: 24.11.2006 DE 102006055960
(71) Anmelder: Seebeck, Carl-Jörn, 5730 Mittersill (AT)
(72) Erfinder: Seebeck, Carl-Jörn, 5730 Mittersill (AT)
(74) Vertreter: Meier, Frank

(57) **Zusammenfassung**

Die Erfindung betrifft ein Verfahren und ein System zum Erstellen einer Postkarte mit einer digital erzeugten Fotografie eines sich bewegenden Sportlers (2), aufweisend: eine stationäre, digitale, vollautomatische Fotokamera (4) zum Erzeugen einer digitalen Fotografie eines sich in einem bestimmten Bereich (6) bewegenden Sportlers (2), einen mit der Fotokamera (4) verbundenen Bewegungssensor zum Erfassen eines sich bewegenden Sportlers (2) in dem bestimmten Bereich (6), einen mit dem Bewegungssensor und der Fotokamera (4) verbundenen Auslöser zum Auslösen der Fotokamera (4), wenn der Bewegungssensor einen sich bewegenden Sportler (2) in dem bestimmten Bereich (6) erfasst, einen mit der Fotokamera (4) verbundenen Sender (8) zum schnurlosen Versenden der erzeugten digitalen Fotografie des sich bewegenden Sportlers (2), einen Empfänger (14) zum Empfangen der versendeten Fotografie, einen mit dem Empfänger (14) verbundenen Prozessor (16) zum Verarbeiten der empfangenen Fotografie nach einer vorgegebenen Software, einen mit dem Prozessor (16) verbundenen Speicher (18) zum Speichern der empfangenen Fotografie, eine mit dem Prozessor (16) verbundene Anzeige (20) zum Anzeigen der Fotografie, eine mit dem Prozessor (16) verbundene Eingabeeinheit (22) zum Eingeben von Befehlen an den Prozessor (16), insbesondere von Befehlen bezüglich des Auswählens und des Druckens der angezeigten Fotografie, eine mit dem Prozessor (16) verbundene Bezahleinheit (24) zum Entgegennehmen und Prüfen einer Bezahlung der Postkarte, und einen mit dem Prozessor (16) verbundenen Drucker (26) zum Drucken einer Postkarte mit der ausgewählten und bezahlten Fotografie.

## Beschreibung

Die Erfindung betrifft ein Verfahren und ein System zum Erstellen einer Postkarte mit einer digital erzeugten Fotografie.

Verfahren und Systeme der eingangs genannten Art sind aus dem Stand der Technik bekannt. So zeigt beispielsweise die WO 2005/024742 A1 ein Verfahren und eine Vorrichtung zur individuellen, ortsunabhängigen Gestaltung von Bildern, Karten und dergleichen, insbesondere Postkarten, bei welchen Verfahren und Vorrichtungen die Möglichkeit besteht, das grundsätzlich fertige Produkt, welches vom Benutzer individuell erstellt wurde, zu betrachten und auszuwählen und erst im Anschluss daran durch eine Bezahl- oder Ausgabefunktion freizugeben, wobei die für das individuelle Bild verwendete Aufnahme eine mittels eines Videostreams erstellte Portraitaufnahme des Benutzers des Verfahrens bzw. der Vorrichtung ist.

Nachteilig bei diesem Stand der Technik ist es, dass sich der Benutzer dieser bekannten Vorrichtung in Ruhe vor der Kamera der Vorrichtung befinden muss, um ein scharfes und nicht verwackeltes Bild für die Postkarte erstellen zu können.

Aufgabe der vorliegenden Erfindung ist es, die aus dem Stand der Technik bekannten Nachteile zu vermeiden, insbesondere ein Verfahren und ein System zum Erstellen einer Postkarte mit einer digitalen Fotografie zur Verfügung zu stellen, bei dem sich der Benutzer nicht in Ruhe vor der Kamera befinden muss, sondern sich vielmehr auch in Bewegung befinden kann. Es ist insbesondere Aufgabe der vorliegenden Erfindung, ein System zum Erstellen einer Postkarte mit einer digitalen Fotografie zur Verfügung zu stellen, die auch das Erstellen einer Postkarte mit einer digitalen Fotografie eines sich bewegenden Sportlers, insbesondere eines sich auf einer Skipiste bewegenden Wintersportlers, erlaubt.

Die vorgenannte Aufgabe der vorliegenden Erfindung wird durch ein System gemäß Anspruch 1 und ein Verfahren gemäß Anspruch 18 gelöst.

Die Vorteile liegen insbesondere darin, dass ein System zum Erstellen einer Postkarte mit einer digitalen Fotografie zur Verfügung gestellt wird, bei dem sich der Benutzer nicht in Ruhe vor der Kamera befinden muss. Vielmehr ist es dank der Erfindung möglich, dass sich der Benutzer relativ zu der Kamera in Bewegung befinden kann.

Vor allen Dingen ist es dank der Erfindung erstmals möglich, ein System zum Erstellen einer Postkarte mit einer digitalen Fotografie zur Verfügung zu stellen, welches System auch das Erstellen einer Postkarte mit einer digitalen Fotografie eines sich bewegenden Sportlers erlaubt. Auf diese Weise ist es erstmals möglich, dass ein Sportler sich selbst auf einer Postkarte verschicken kann, wenn er beispielsweise zuvor durch den bestimmten Bereich mit seinem Kanu, seinen Wasserskiern, seinem Fahrrad, seinem Motorrad, seinen Skiern, seinem Snowboard, seinem Rodelschlitten, seinem Skibob oder dergleichen Sportgerät gefahren - oder bspw. als Jogger gelaufen - ist. Es ist somit durch die Erfindung erstmals möglich, einen sich beispielsweise auf einer Skipiste bewegenden Wintersportler vollautomatisch in dem bestimmten Bereich auf der Skipiste - ggf. sogar mehrfach - zu fotografieren und diese Fotos vollautomatisch an einen beliebig weit entfernten Empfänger zu versenden, an dem der Sportler dann eine mit seinem eigenen Portrait bei der Ausübung des Sports versehene Postkarte ausdrucken und verschicken kann.

Denn bisher war kein Sportler, beispielsweise auch kein Skifahrer, mittels herkömmlicher Mittel bzw. ohne Mitbringen von entsprechenden aufwendigen technischen Equipments und ohne eine zweite Person in der Lage, ein Foto von der eigenen sportlichen Tätigkeit zu einer eigenen Fotopostkarte beispielsweise am Rand der Skipiste zu verarbeiten und diese dann versenden zu können. Durch die Erfindung ist es also möglich, dass Personen, die sich im Urlaub sportlich betätigen, bei der Ausübung ihrer eigenen sportlichen Betätigung fotografisch festgehalten werden. Den Sportlern kann durch die Erfindung die Möglichkeit gegeben werden, sofort nach Erstellung der Aufnahme, beispielsweise an einem Ort der Pause, wie einer Skihütte, das aufgenommene Bild, beispielsweise mit vorgegebenen Textbeispielen, als Postkarte, beispielsweise an einem Touch-Screen-Automaten, auszuwählen, sofort auszudrucken und ggf. noch am selben Tag als Postkarte zu versenden.

Obwohl es sich hierbei um einen speziell für Wintersportler, beispielsweise Skifahrer oder Snowboarder, besonders vorteilhafte Erfindung handelt, kann diese, wie eingangs erwähnt, auch für alle anderen Sportler Anwendung finden, die im Stand der Technik keine Möglichkeit hatten, von sich selbst eine Aufnahme ohne Zuhilfenahme einer zweiten Person zu machen.

Die Fotokamera gemäß der Erfindung kann die digitalen Fotodaten beispielsweise mit einer Funk- oder WLAN-Verbindung zu dem entfernt aufgestellten bevorzugt aus Empfänger, Prozessor, Anzeige, Eingabeeinheit, Bezahleinheit, Drucker (26) und Speicher bestehenden Touch-Screen-Automaten übermitteln. Diese bevorzugt aus den vorstehend genannten Einzelheiten bestehende Vorrichtung verarbeitet mit dem Prozessor eine entsprechend zugeschnittene Software, mit dem der Urlauber seine Fotos ansehen und beispielsweise nach einer vorgegebenen Textauswahl eine, bevorzugt farbige, Postkarte, bevorzugt unmittelbar nach der Auswahl der Aufnahme auf dem Touch-Screen-Bildschirm, ausdrucken lassen kann.

Bei einer bevorzugten Ausführungsform der Erfindung befindet sich die Fotokamera außerhalb der Reichweite des Menschen über dem Boden. Sie ist dabei bevorzugt mehr als drei Meter, weiter bevorzugt mehr als vier Meter über dem Boden installiert. Auf diese Weise wird verhindert, dass die Fotokamera von Vandalen zerstört wird.

Bei einer weiteren bevorzugten Ausführungsform der Erfindung weisen Fotokamera, Bewegungssensor, Auslöser und Sender eine eigene, von den übrigen Systemkomponenten unabhängige Energieversorgung, bevorzugt unter Verwendung von Solarzellen, auf. Auf diese Weise wird sichergestellt, dass die Fotokamera beispielsweise auch auf einem sehr entfernten Ort in den Bergen, beispielsweise auf einer entfernten Skipiste oder auch einer sogenannten schwarzen Piste aufgestellt werden kann, an der normalerweise keine Stromversorgung möglich wäre. Trotzdem stellt die Erfindung durch das sichere Aufstellen des Touch-Screen-Automaten beispielsweise in einer Hütte sicher, dass der Wintersportler auch in einem solchen Fall anschließend in aller Ruhe die Aufnahmen auswerten und ausdrucken kann.

Vorteilhaft ist es, wenn der Bewegungssensor als Bewegungssensorbereich in der Fotokamera selbst ausgebildet ist. Dies ist insoweit vorteilhaft, da der Aufbau des erfindungsgemäßen Systems so insgesamt vereinfacht wird.

Weiter bevorzugt erzeugt und versendet die Fotokamera nach dem Auslösen mehr als eine Fotografie, noch weiter bevorzugt mehr als zwei Fotografien, noch weiter bevorzugt mehr als drei Fotografien, und noch weiter bevorzugt mehr als fünf Fotografien. Auf diese Weise kann dem Benutzer bei der späteren Sichtung des Fotomaterials eine größere Auswahl zur Verfügung gestellt werden.

Der bestimmte Bereich und der Drucker für die Postkarten können gemäß der Erfindung in einem großen Abstand, bevorzugt in einem Abstand von mehr als 50 Metern, weiter bevorzugt in einem Abstand von mehr als 100 Metern, zueinander angeordnet werden. Auf diese Weise kann die Kamera an jedem beliebigen Ort in dem Wintersportgebiet oder auch anderen Gebieten der sportlichen Betätigung aufgestellt werden, ohne dass die einer Nachfüllung von Papier bedürfende und daher wartungsintensive Druckeinrichtung des Postkartendruckers ungeschützt außerhalb eines Hauses oder einer Hütte aufgestellt werden müsste. Denn das Fotokamera, Bewegungssensor, Auslöser und Sender bestehende Fotomodul kann vorteilhaft in einem widerstandsfähigen und vor allem wetterfesten Gehäuse völlig wartungsfrei und mit autarker Energieversorgung untergebracht werden, so dass das Gehäuse an jedem beliebigen Ort in der Natur installiert werden kann.

Bei einer vorteilhaften Ausführungsform der vorliegenden Erfindung ist der bestimmte Bereich optisch, beispielsweise durch zwei seitliche Ränder des bestimmten Bereichs markierende Barken oder Pylone, für den sich bewegenden Sportler, beispielsweise den Skifahrer, erkennbar, beispielsweise auf der Skipiste, markiert. Auf diese Weise ist es dem Sportler vorteilhaft möglich, genau zu wissen, wo und wann von ihm die Fotos mit der Fotokamera erzeugt werden Es ist dem Sportler somit vorteilhaft möglich, sich auf die Fotografie vorzubereiten und eine postkartengeeignete, beispielsweise besonders spektakulär oder besonders sportlich aussehende Haltung anzunehmen.

Weitere bevorzugte Ausführungsformen der Erfindung sind in den Unteransprüchen angegeben.

Ein bevorzugtes Ausführungsbeispiel der Erfindung wird nun anhand der Zeichnung beschrieben. Es zeigen:
- Fig. 1: eine schematische Ansicht des erfindungsgemäßen Systems; und
- Fig. 2: eine Detailansicht eines Teils des erfindungsgemäßen Systems.

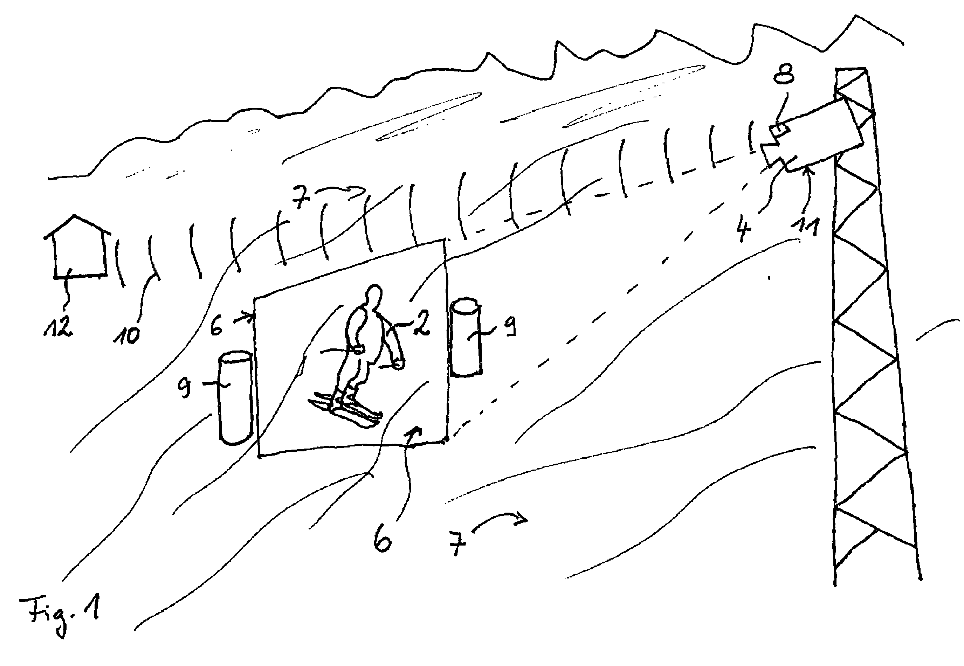

Fig. 1 zeigt eine schematische Ansicht einer Ausführungsform eines erfindungsgemäßen Systems zum Erstellen einer Postkarte mit einer digital erzeugten Fotografie eines sich bewegenden Wintersportlers 2. Das Ausführungsbeispiel zeigt eine stationäre, digitale, vollautomatische Fotokamera 4 zum Erzeugen einer digitalen Fotografie des Sportlers 2. Nicht dargestellt ist ein als Bewegungssensorbereich in der Fotokamera 4 selbst integrierter Bewegungssensor zum Erfassen des Sportlers 2 in einem bestimmten Bereich 6 einer Skipiste 7.

Der bestimmte Bereich 6 ist auf der Skipiste 7 durch zwei die seitlichen Ränder des bestimmten Bereichs 6 markierende Barken oder Pylone 9, für den sich bewegenden Sportler 2, beispielsweise den dargestellten Skifahrer, optisch erkennbar markiert. Auf diese Weise ist es dem Sportler vorteilhaft möglich, zu entscheiden, ob von ihm die Fotos mit der Fotokamera 4 erzeugt werden sollen oder nicht.

Der Bewegungssensor ist verbunden mit einem ebenfalls nicht dargestellten Auslöser zum Auslösen der Fotokamera 4, wenn der Bewegungssensor den sich bewegenden Sportler 2 in dem bestimmten Bereich 6 erfasst.

Weiterhin ist ein Sender 8 vorgesehen, der mit Fotokamera 4 verbunden ist, um ein mit der Fotokamera 4 erzeugtes digitales Foto des Sportlers 2 schnurlos zu versenden. Fotokamera 4, Bewegungssensor, Auslöser und Sender 8 sind zusammen in einem wetterfesten Gehäuse 11 untergebracht. Das schnurlose Versenden ist durch symbolisch dargestellte elektromagnetische Wellen 10 in der Figur 1 dargestellt.

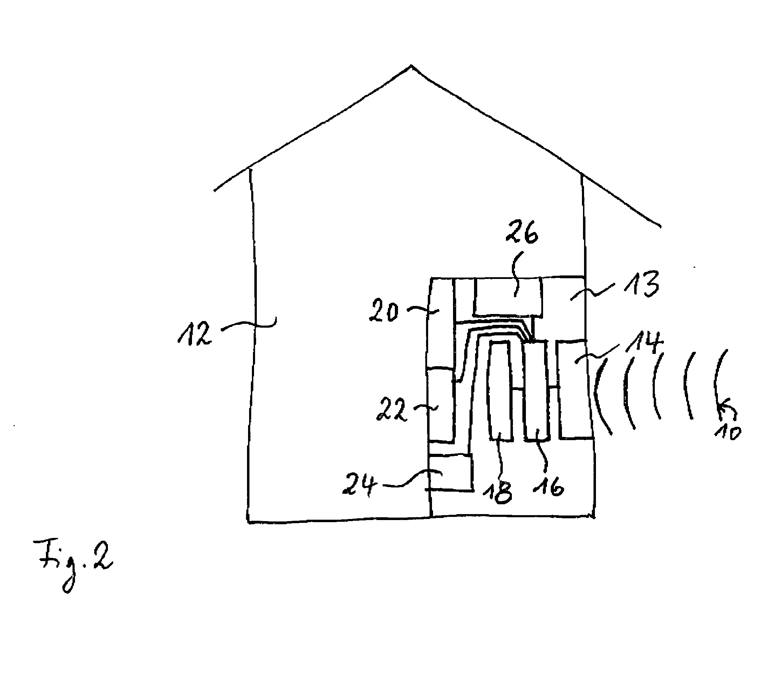

In einer Skihütte 12 kann das Signal 10 mit Hilfe eines in Fig. 2 dargestellten Empfängers 14 zum Empfangen der versendeten Fotografie empfangen werden.

Fig. 2 zeigt einen in der Hütte 12 der Fig. 1 installierten Teil 13 des erfindungsgemäßen Systems. Dieser Teil 13 besteht aus dem Empfänger 14, einem mit dem Empfänger 14 verbundenen Prozessor 16 zum Verarbeiten der empfangenen Fotografie nach einer vorgegebenen Software, einen mit dem Prozessor 16 verbundenen Speicher 18 zum Speichern der empfangenen Fotografie, eine mit dem Prozessor 16 verbundene Anzeige 20 zum Anzeigen der Fotografie, eine mit dem Prozessor 16 verbundene Eingabeeinheit 22 zum Eingeben von Befehlen an den Prozessor 16, insbesondere von Befehlen bezüglich des Auswählens und des Druckens der angezeigten Fotografie, eine mit dem Prozessor 16 verbundene Bezahleinheit 24 zum Entgegennehmen und Prüfen einer Bezahlung der Postkarte, und einen mit dem Prozessor 16 verbundenen Drucker 26 zum Drucken einer Postkarte mit der ausgewählten und bezahlten Fotografie. Empfänger 14, Prozessor 16, Speicher 18, Anzeige 20, Eingabeeinheit 22, Bezahleinheit 24 und Drucker 26 bilden somit eine integrale, in einem Gehäuse befindliche Einheit 13. Diese Einheit 13 wird im Rahmen der vorliegenden Anmeldung auch als Touch-Screen-Automat bezeichnet. Denn die Anzeige 20 und die Eingabeeinheit 22 sind bevorzugt integral als ein Touch-Screen 28 auf der Einheit 13 ausgebildet.

## Patentansprüche

1. System zum Erstellen einer Postkarte mit einer digital erzeugten Fotografie eines sich bewegenden Sportlers (2), aufweisend:
eine stationäre, digitale, vollautomatische Fotokamera (4) zum Erzeugen einer digitalen Fotografie eines sich in einem bestimmten Bereich (6) bewegenden Sportlers (2),
einen mit der Fotokamera (4) verbundenen Bewegungssensor zum Erfassen eines sich bewegenden Sportlers (2) in dem bestimmten Bereich (6),
einen mit dem Bewegungssensor und der Fotokamera (4) verbundenen Auslöser zum Auslösen der Fotokamera (4), wenn der Bewegungssensor einen sich bewegenden Sportler (2) in dem bestimmten Bereich (6) erfasst,
einen mit der Fotokamera (4) verbundenen Sender (8) zum schnurlosen Versenden der erzeugten digitalen Fotografie des sich bewegenden Sportlers (2),
einen Empfänger (14) zum Empfangen der versendeten Fotografie,
einen mit dem Empfänger (14) verbundenen Prozessor (16) zum Verarbeiten der empfangenen Fotografie nach einer vorgegebenen Software,
einen mit dem Prozessor (16) verbundenen Speicher (18) zum Speichern der empfangenen Fotografie,
eine mit dem Prozessor (16) verbundene Anzeige (20) zum Anzeigen der Fotografie,
eine mit dem Prozessor (16) verbundene Eingabeeinheit (22) zum Entgegennehmen von Befehlen an den Prozessor (16), insbesondere von Befehlen bezüglich des Auswählens und des Druckens der angezeigten Fotografie,
eine mit dem Prozessor (16) verbundene Bezahleinheit (24) zum Entgegennehmen und Prüfen einer Bezahlung der Postkarte, und
einen mit dem Prozessor (16) verbundenen Drucker (26) zum Drucken einer Postkarte mit der ausgewählten und bezahlten Fotografie.

2. System nach Anspruch 1,
wobei die Fotokamera (4) außerhalb der Reichweite des Menschen über
dem Boden installiert ist, bevorzugt mehr als drei Meter, weiter bevorzugt mehr als vier Meter über dem Boden.

3. System nach einem der vorstehenden Ansprüche,
wobei Fotokamera (4), Bewegungssensor, Auslöser und Sender (8) eine eigene, von den übrigen Systemkomponenten unabhängige Energieversorgung, bevorzugt unter Verwendung von Solarzellen, aufweisen.

4. System nach einem der vorstehenden Ansprüche,
wobei der Bewegungssensor als Bewegungssensorbereich in der Fotokamera (4) selbst ausgebildet ist.

5. System nach einem der vorstehenden Ansprüche,
wobei die Fotokamera (4) nach dem Auslösen mehr als eine Fotografie, bevorzugt mehr als zwei Fotografien, weiter bevorzugt mehr als drei Fotografien, noch weiter bevorzugt mehr als fünf Fotografien, erzeugt und mit Hilfe des Senders (8) versendet.

6. System nach einem der vorstehenden Ansprüche,
wobei der bestimmte Bereich und der Drucker (26) in einem großen Abstand, bevorzugt in einem Abstand von mehr als 50 Metern, weiter bevorzugt in einem Abstand von mehr als 100 Metern, zueinander angeordnet sind.

7. System nach einem der vorstehenden Ansprüche,
wobei der bestimmte Bereich (6) sich in einem Wintersportgebiet, bevorzugt auf einer Skipiste, befindet.

8. System nach einem der vorstehenden Ansprüche,
wobei der bestimmte Bereich (6) optisch für den sich bewegenden Sportler (2) erkennbar markiert ist.

9. System nach einem der vorstehenden Ansprüche,
wobei Fotokamera (4), Bewegungssensor, Auslöser und Sender (8) eine integrale, bevorzugt in einem Gehäuse integrierte, Einheit bilden.

10. System nach einem der vorstehenden Ansprüche,
wobei Empfänger (14), Prozessor (16), Speicher (18), Eingabeeinheit (22), Anzeige (20), Bezahleinheit (24) und Drucker (26) eine integrale, bevorzugt in einem Gehäuse befindliche, Einheit (13) bilden.

11. System nach einem der vorstehenden Ansprüche,
wobei Eingabeeinheit (22) und Anzeige (20) zu einem Touch-Screen (28) integriert sind.

12. System nach einem der vorstehenden Ansprüche,
wobei die Eingabeeinheit (22) zur Auswahl der von dem Benutzer gewünschten Fotografie den Benutzer auffordert, Datum und Uhrzeit einzugeben, wobei dem Benutzer aufgrund dieser Angaben anschließend eine Auswahl von in dem bestimmten Bereich (6) erstellten Fotografien auf der Anzeige (20) angezeigt wird, welche Fotografien in dem bestimmten Bereich (6) an genau diesem Datum und zeitlich am nächsten zu dieser Uhrzeit erstellt worden sind, wobei dem Benutzer bevorzugt mehrere, weiter bevorzugt mehr als fünf, Fotografien vor der genannten Uhrzeit und bevorzugt mehrere, weiter bevorzugt mehr als fünf, Fotografien nach der genannten Uhrzeit zur Auswahl angezeigt werden.

13. System nach einem der vorstehenden Ansprüche,
wobei der Benutzer durch die Eingabeeinheit (22) aufgefordert wird, zu beantworten, ob zusätzlicher Text auf die Vorderseite der Postkarte aufgedruckt werden soll.

14. System nach einem der vorstehenden Ansprüche,
wobei die Eingabeeinheit (22) den Benutzer auffordert zu beantworten, ob die Postkarte mit dem aktuellen Datum versehen werden soll.

15. System nach einem der vorstehenden Ansprüche,
wobei die Eingabeeinheit (22) den Benutzer auffordert zu beantworten, ob der Benutzer die Zustelladresse für die Postkarte auf die Rückseite der Postkarte aufgedruckt haben möchte, wobei dann, wenn der Benutzer diese Frage mit Ja beantwortet, der Benutzer zur Eingabe der Zustelladresse von der Eingabeeinheit (22) aufgefordert wird.

16. System nach einem der vorstehenden Ansprüche,
wobei die Eingabeeinheit (22) den Benutzer auffordert, die Anzahl der zu druckenden Postkarten mit der ausgewählten Fotografie einzugeben und dementsprechend zur Zahlung eines bestimmten Geldbetrages auffordert.

17. System nach einem der vorstehenden Ansprüche,
wobei die Eingabeeinheit (22) dem Benutzer jederzeit die Möglichkeit bietet, bevorzugt auch nach dem Drucken der bezahlten Postkarte, zu mindestens einer der auf der Anzeige (20) zuvor angezeigten Bildübersicht zurückzuspringen.

18. Verfahren zum Erstellen einer Postkarte mit einer digital erzeugten Fotografie eines sich bewegenden Sportlers (2), aufweisend:
Erzeugen einer digitalen Fotografie eines sich bewegenden Sportlers (2), sobald der sich bewegende Sportler (2) in einem bestimmten Bereich (6), bspw. einer Skipiste (7), erfasst wird,
Versenden der erzeugten digitalen Fotografie des sich bewegenden Sportlers (2),
Empfangen der versendeten Fotografie,
Verarbeiten der empfangenen Fotografie nach einer vorgegebenen Software,
Speichern der empfangenen Fotografie,
Anzeigen der gespeicherten Fotografie,
Entgegennehmen von Befehlen bezüglich des Auswählens und des Druckens der angezeigten Fotografie,
Entgegennehmen und Prüfen einer Bezahlung der Postkarte, und
Drucken einer Postkarte mit der ausgewählten und bezahlten Fotografie.

19. Verfahren nach dem vorstehenden Anspruch,
wobei mehr als eine Fotografie, bevorzugt mehr als zwei Fotografien, weiter bevorzugt mehr als drei Fotografien, noch weiter bevorzugt mehr als fünf Fotografien, erzeugt und versendet werden.

20. Verfahren nach einem der beiden vorstehenden Ansprüche,
wobei ein Benutzer zur Auswahl der von dem Benutzer gewünschten Fotografie aufgefordert wird, Datum und Uhrzeit einzugeben, wobei dem Benutzer aufgrund dieser Angaben anschließend eine Auswahl von in dem bestimmten Bereich (6) erstellten Fotografien angezeigt wird, welche Fotografien in dem bestimmten Bereich (6) an genau diesem Datum und zeitlich am nächsten zu dieser Uhrzeit erstellt worden sind, wobei dem Benutzer bevorzugt mehrere, weiter bevorzugt mehr als fünf, Fotografien vor der genannten Uhrzeit und bevorzugt mehrere, weiter bevorzugt mehr als fünf, Fotografien nach der genannten Uhrzeit zur Auswahl angezeigt werden.

21. Verfahren nach einem der vorstehenden Ansprüche,
wobei der Benutzer aufgefordert wird zu beantworten, ob zusätzlicher Text auf die Vorderseite der Postkarte aufgedruckt werden soll.

22. Verfahren nach einem der vorstehenden Ansprüche,
wobei der Benutzer aufgefordert wird zu beantworten, ob die Postkarte mit dem aktuellen Datum versehen werden soll.

23. Verfahren nach einem der vorstehenden Ansprüche,
wobei der Benutzer aufgefordert wird zu beantworten, ob die Zustelladresse für die Postkarte auf die Rückseite der Postkarte aufgedruckt werden soll,
wobei dann, wenn diese Frage mit Ja beantwortet wird, der Benutzer zur Eingabe der Zustelladresse aufgefordert wird.

24. Verfahren nach einem der vorstehenden Ansprüche,
wobei der Benutzer aufgefordert wird, die Anzahl der mit der ausgewählten Fotografie zu druckenden Postkarten einzugeben und dementsprechend zur Zahlung eines bestimmten Geldbetrages aufgefordert wird.

25. Verfahren nach einem der vorstehenden Ansprüche,
wobei dem Benutzer jederzeit die Möglichkeit geboten wird, bevorzugt auch nach dem Drucken der bezahlten Postkarte, zu mindestens einer der vorhergehenden Verfahrensschritte zurückzuspringen.
